# EUROPÄISCHE PATENTSCHRIFT

(11) **EP 1 155 924 B1**
(45) Veröffentlichungstag und Bekanntmachung des Hinweises auf die Patenterteilung: **02.11.2005**
(21) Anmeldenummer: 01111920.3
(22) Anmeldetag: 18.05.2001
(51) Int. Cl.: B60R 21/16

(54) **Gassackmodul**
Air bag module
Module de sac de sécurité gonflable

(30) Priorität: 19.05.2000 DE 20008916 U; 20.12.2000 DE 20021533 U
(43) Veröffentlichungstag der Anmeldung: 21.11.2001
(73) Patentinhaber: TRW Automotive Safety Systems GmbH, 63743 Aschaffenburg (DE)
(72) Erfinder: Braunschädel, Axel, 63773 Goldbach (DE)
(74) Vertreter: Kitzhofer, Thomas

(56) Entgegenhaltungen:
- WO-A1-01/34436
- DE-A1- 4 142 326
- DE-A1- 19 813 832
- US-A- 5 180 188
- US-A- 5 249 825
- US-A- 5 362 101
- US-A- 5 489 119
- US-A- 5 678 858
- US-A- 5 887 894

## Beschreibung

Die Erfindung betrifft ein Gassackmodul, mit einem Gassack, der eine Vorderwand aufweist, deren Mittenabschnitt im aufgeblasenen Zustand eine Einbuchtung aufweist, indem eine Rückhalteeinrichtung am Mittenabschnitt angreift und ihn wenigstens teilweise an einer Bewegung in Richtung aus dem Modul heraus hindert, wobei die Rückhalteeinrichtung so gebildet ist, daß sie den Mittenabschnitt nach einer anfänglichen Rückhaltung freigeben kann.

Gassackmodule mit einem sogenannten ringförmigen Gassack sind bereits aus der DE 36 30 685 A1 bekannt. Die Vorderwand ist dabei diejenige Wand des Gassacks, die zum Insassen im aufgeblasenen Zustand gerichtet ist und auf die der Insasse prallen kann. Der Mittenabschnitt ist üblicherweise das Zentrum der Vorderwand, der beim bekannten Gassack fest am Gassackmodul befestigt bleibt, so daß sich im aufgeblasenen Zustand die bereits erwähnte ringförmige Kammer bildet.

Aus der DE 199 04 072 A1 ist ebenfalls ein Gassackmodul mit einem ringförmigen Gassack bekannt, dessen Mittenabschnitt durch ein trichterförmiges Teil der Modulabdeckung an der Bewegung in Richtung zum Insassen gehindert wird. Die trichterförmige Modulabdeckung soll eine Entfaltungsrichtung radial schräg nach außen vorgeben, damit Insassen, die sich deutlich außerhalb einer mittigen Sitzposition (in Fahrzeuglängsrichtung gesehen mittig zum Fahrzeugsitz) befinden, auch eine Rückhaltung erfahren. Auch zu nahe am Lenkrad sitzende Insassen werden durch den normalerweise zuerst mit dem Insassen in Kontakt kommenden, Mittenabschnitt nicht verletzt, denn der Mittenabschnitt wird permanent zurückgehalten. Allenfalls eine geringfügige Bewegung der Modulabdeckung aus dem Modul heraus in Richtung Insassen (Entfaltungsrichtung) ist erlaubt, wobei diese Bewegung so klein ist, daß der Insasse nicht mit der Abdeckung in Kontakt kommen kann.

Die gattungsgemäße US 5,887,894 zeigt eine Sicherheitseinrichtung für ein Kraftfahrzeug mit einem feststehenden Mittenabschnitt eines ringförmigen Gassacks, wobei der Mittenabschnitt durch ein Messer, die Flamme eines eigens hierzu vorgesehenen Zünders oder eine Mechanik gelöst werden kann.

Der Mittenabschnitt steht bei den bekannten Gassäcken nicht zur Rückhaltung zur Verfügung, auch nicht bei schweren Insassen, die sich in einer mittigen Sitzposition befinden und damit im Bereich der Einbuchtung auf die Vorderwand treffen.

Die Erfindung schafft einen Gassack, welcher schwere und mittig sitzende Insassen noch sicherer zurückhält. Dies wird bei einem Gassackmodul der eingangs genannten Art dadurch erreicht, daß die Rückhalteeinrichtung durch heißes Gas aus dem Gasgenerator zerstört wird. Beim erfmdungsgemäßen Gassackmodul wird der Mittenabschnitt anfangs zurückgehalten, damit sich der Gassack zuerst radial schräg nach außen bewegt. In dieser Phase des Aufblasvorgangs wird dann auch die Einbuchtung gebildet. Im weiteren Verlauf des Aufblasvorgangs jedoch gibt die Rückhalteeinrichtung den Mittenabschnitt frei, so daß sich dieser zum Insassen bewegen und der Insasse den Mittenabschnitt kontaktieren kann, durch ihn also zurückgehalten werden kann. Dieses Freigeben des Mittenabschnitts kann zwingend stets erfolgen oder auch abhängig von bestimmten Rahmenbedingungen, z.B. ab einem bestimmten Gassackinnendruck oder von der Position des Insassen. Beispielsweise würde ein schwerer Insasse oder ein durchschnittlich schwerer Insasse bei einer hohen Aufprallintensität, wenn er in den Gassack fällt, einen hohen Gassackinnendruck erzeugen, der dann dazu führt, daß die Rückhalteeinrichtung den Mittenabschnitt freigibt und dieser zur Rückhaltung beitragen kann. Über Lagesensoren läßt sich beispielsweise auch die Sitzposition des Insassen bestimmen. Wäre der Insasse zu nahe am Gassackmodul oder außermittig positioniert, wenn es zum Aufprall kommt, würde gegebenenfalls die Rückhalteeinrichtung den Mittenabschnitt überhaupt nicht freigeben, um eine bessere Rückhaltewirkung zu erzielen und die Gefahr der Insassenverletzung durch den Gassack zu minimieren.

Die Rückhalteeinrichtung kann beispielsweise während des Entfaltens gezielt zerstört werden, um den Mittenabschnitt freizugeben. Die Zerstörung erfolgt durch Temperatureinwirkung aufgrund des heißen Druckgases.

Die Rückhalteeinrichtung weist gemäß einer Ausgestaltung ein Fangband auf, welches am Mittenabschnitt befestigt ist. Dieses Fangband hat beispielsweise eine Reißnaht, welche zum Freigeben des Mittenabschnitts zerstört wird.

Eine kostengünstigere Ausführungsform sieht vor, daß die Rückhalteeinrichtung eine innenseitig am Mittenabschnitt befestigte Schlaufe und einen Haltering umfaßt, an dem die Schlaufe eingehängt ist. Schlaufe oder Haltering werden ab einer bestimmten physikalischen Belastung zerstört.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine erste Ausführungsform des erfindungsgemäßen Gassackmoduls bei noch nicht freigegebenem Mittenabschnitt,
Figur 2 eine perspektivische Draufsicht auf den in Figur 1 gezeigten Gassack,
Figur 3 eine vergrößerte Querschnittsansicht des Gassackmoduls im Bereich des Modulgehäuses gemäß einer zu Erläuterungszwecken angefügte Ausführungsform,
Figur 4 eine zu Erläuterungszwecken angefügte Ausführungsform des Gassackmoduls mit noch nicht freigegebenem Mittenabschnitt und
Figur 5 eine Ausführungsform des erfindungsgemäßen Gassackmoduls mit noch nicht freigegebenem Mittenabschnitt.

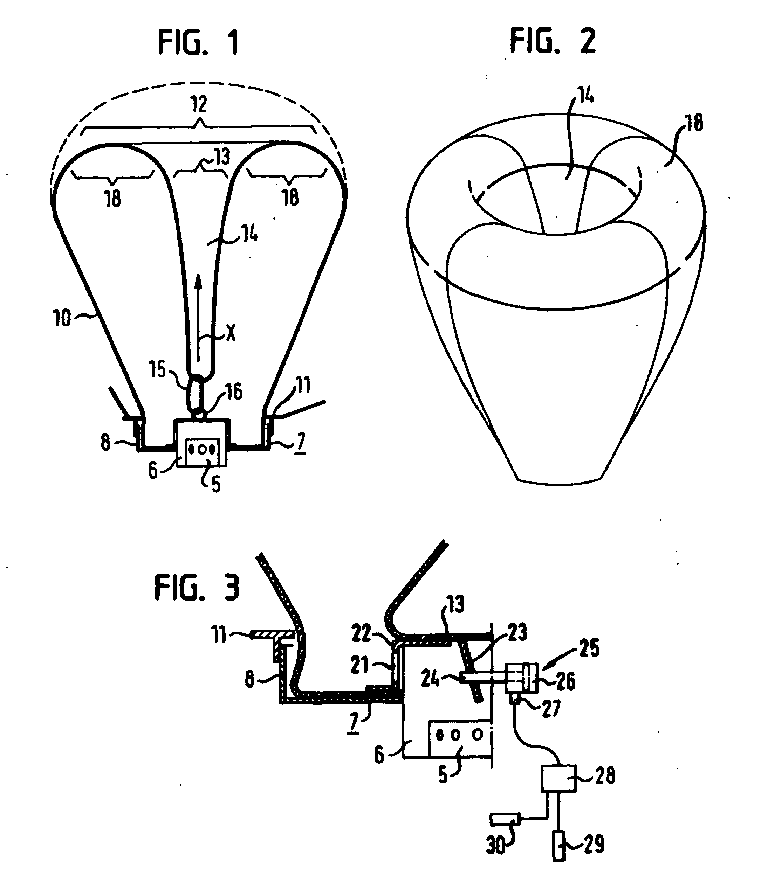

In Figur 1 ist ein Gassackmodul dargestellt, welches im Lenkrad eines Fahrzeugs untergebracht ist. Das Gassackmodul weist einen Gasgenerator 5 auf, um den herum ein Halteteil in Form eines Diffusors 6 angeordnet ist. Der Diffusor 6 ist wiederum zusammen mit dem Gasgenerator 5 am Gehäuse 7 des Gassackmoduls arretiert. Zwischen dem Diffusor 6 und der Außenwand 8 des Gehäuses 7 ist ein Ringraum gebildet, in dem ein Gassack 10 im gefalteten Zustand untergebracht ist. Eine Abdeckkappe 11 verschließt das Gassackmodul im nicht entfalteten Zustand des Gassacks und wird beim Entfalten nach außen geschwenkt. Der Gassack besteht aus einer Gassackwand, die mehrere Abschnitte hat, unter anderem einen Abschnitt, der als Vorderwand 12 bezeichnet wird. Die Vorderwand 12 ist der Teil des Gassacks, der dem Insassen zugewandt ist. Die Vorderwand hat einen zentrischen Abschnitt, im folgenden Mittenabschnitt 13 genannt, der einwärts in Richtung zum Diffusor 6 verläuft, also in das Innere des Gassacks gerichtet ist, so daß sich eine Einbuchtung 14 ergibt.

Innenseitig ist am Mittenabschnitt 13, genauer gesagt am tiefsten Punkt des Mittenabschnitts in dem in Figur 1 gezeigten aufgeblasenen Zustand, ein zur Schlaufe geformtes Fangband 15 befestigt. Die Schlaufe ist in einen Haltering 16 eingelegt, welcher am Diffusor 6 befestigt ist.

Bei dem in Figur 1 gezeigten Zustand ist bereits ein Großteil des vom Gasgenerator 5 erzeugten Gases in den Gassack 10 eingeströmt. Als Rückhaltefläche dient der mit 18 bezeichnete ringförmige Abschitt der Vorderwand 12.

Die Schlaufe in Form des Fangbandes 15 zusammen mit dem Haltering 16 bilden eine Rückhalteeinrichtung für den Mittenabschnitt.

Das Gassackmodul funktioniert folgendermaßen. Sobald ein Unfall detektiert wird, wird der Gasgenerator 5 Gas in den Diffusor 6 ausströmen lassen. Das Gas gelangt dann in den Gassack 10, und dieser öffnet die Abdeckung 11, um in den in Figur 1 gezeigten Zustand zu gelangen, bei dem der Mittenabschnitt über die Rückhalteeinrichtung an der Bewegung in Richtung X aus dem Modul heraus gehindert wird. Die Richtung X ist in diesem Zusammenhang die Richtung, die durch die Längserstreckung der Einbuchtung 14 vom Modul aus nach außen definiert ist. Im üblichen Einsatz des Gassackmoduls verläuft die Richtung vom Modul aus zum Insassen.

Die anfängliche Bewegung des Abschnitts 18 schräg nach außen führt bei unterschiedlich positionierten Insassen, zu einer guten Rückhaltung und einer niedrigen Belastung durch den sich entfaltenden Gassack. Auch bei einem mittig sitzenden Insassen führt die gewählte Konstruktion zu geringeren Belastungen, denn der Mittenabschnitt 13 wird bei herkömmlichen Gassäcken am stärksten beschleunigt, und der von ihm ausgehende Impuls auf den Insassen ist der größte. Wird die Rückhalteeinrichtung aber zerstört, so daß sich der Mittenabschnitt 13, bezogen auf Figur 1, nach oben, d.h. in Richtung zum Insassen bewegen kann, steht eine größere Rückhaltefläche zur Verfügung.

Nach dem Freigeben des Mittenabschnitts 13 erhält der Gassack eine mit gestrichelten Linien dargestellte Außenform im Bereich der Vorderwand 12.

Bei der zu Erläuterungszwecken angefügten Ausführungsform nach Figur 3 ist zu erkennen, daß das Gas vom Diffusor 6 durch Öffnungen 21 in einem Gassackhalteblech 22 in den Gassack strömt. Der Mittenabschnitt 13 hat innenseitig ein Fangband 23 mit einer Öffnung, durch die ein Stift 24 als Teil eines Antriebs 25 verläuft. Der Stift 24 ist der Ausläufer einer Kolbenstange einer Kolben-Zylinder-Einheit 26, die durch einen pyrotechnischen Treibsatz 27 in Bewegung versetzt werden kann. Der pyrotechnische Treibsatz 27 wird von einer Steuerung 28 bedarfsweise aktiviert, die mit mehreren Sensoren 29, 30 gekoppelt ist. Die Sensoren 29 sind im Fahrgastinnenraum angeordnet und können die Position des vom Gassack 10 zurückzuhaltenden Fahrzeuginsassen bestimmen. Die Sensoren 30 sind sogenannte Crash-Sensoren, die einen Unfall und die Unfallschwere detektieren.

Bei der zu Erläuterungszwecken angefügten Ausführungsform gemäß Figur 3 wird die Rückhalteeinrichtung durch den Antrieb 25 und das Fangband 23 gebildet.

Im Rückhaltefall wird der Gassack zuerst bei zurückgehaltenem Mittenabschnitt 13 vollständig aufgeblasen. Befindet sich der Fahrzeuginsasse zu nahe am Fahrzeuglenkrad oder nicht mittig ausgerichtet auf seinem Fahrzeugsitz, wird der Antrieb 25 überhaupt nicht betätigt, und der Gassack behält die ringförmige Geometrie.

Ist jedoch beispielsweise der Unfall schwer oder ist der Insasse überdurchschnittlich schwer, so daß unbedingt vermieden werden muß, daß durch die Einbuchtung 14 eine zu geringe Rückhaltefläche zur Verfügung steht oder der Insasse zu tief in den Gassack 10 im Bereich der Einbuchtung 14 eintritt, so wird der Antrieb 25 von der Steuerung 28 betätigt. Das über den pyrotechnischen Antrieb 27 in die Kolben-Zylinder-Einheit 26 einströmende Gas führt zum Verschieben des Stiftes 24 nach rechts, so daß der Stift 24 das Fangband 23 und damit den Mittenabschnitt 13 freigibt und dieser in Richtung Insassen bewegt wird.

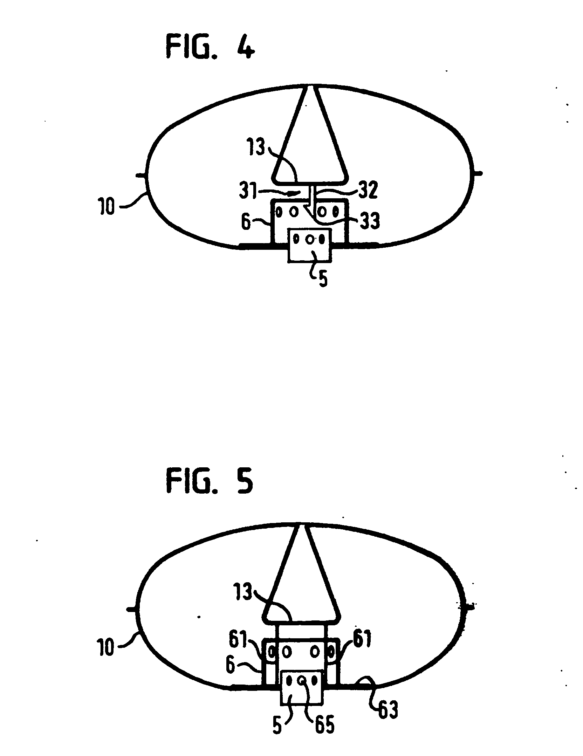

Bei der zu Erläuterungszwecken angefügten Ausführungsform nach Figur 4 ist als Rückhalteeinrichtung eine Rastverbindung 31 vorgesehen, indem innenseitig am Mittenabschnitt 13 ein Textilteil 32 mit einem verdickten Ende 33 vorgesehen ist, wobei das verdickte Ende durch eine zentrische Öffnung im Diffusor 6 ragt. Ab Erreichen eines bestimmten Innendrucks wird die Rastverbindung gelöst, so daß der Mittenabschnitt 13 sich zum Insassen bewegen kann.

Anstatt der Rastverbindung 31 kann ein Fangband vorgesehen sein, welches durch Reißnähte am Mittenabschnitt 13 befestigt ist. Das Fangband ist dann am Diffusor 6 unmittelbar bleibend befestigt. Wird die Reißnaht zerstört, wird der Mittenabschnitt 13 freigegeben.

Bei der Ausführungsform nach Figur 5 ist der Mittenabschnitt 13 über zwei Fangbänder 61 mit einem Bodenblech 63 des Diffusors 6 verbunden. Die Fangbänder 61 ragen deshalb durch den Diffusor 6 hindurch und erstrecken sich nahe von Ausströffnungen 65 des Gasgenerators 5 nach unten. In der ersten Phase der Entfaltung nimmt der Gassack 10 die in Figur 5 gezeigte Gestalt an, die durch die Rückhalteeinrichtung in Form der Fangbänder 61 stark bestimmt ist. Am Ende des Entfaltungsvorgangs jedoch werden die Fangbänder 61 durch das auf sie auftreffende heiße Gas so geschwächt, daß sie reißen und der Mittenabschnitt 13 zur Bewegung in Richtung Insassen freigegeben wird. Die Rückhalteeinrichtung wird in dieser Ausführungsform durch die Fangbänder 61 gebildet.

## Patentansprüche

1. Gassackmodul, mit einem Gassack (10), der eine Vorderwand (12) aufweist, deren Mittenabschnitt (13) im aufgeblasenen Zustand eine Einbuchtung (14) aufweist, indem eine Rückhalteeinrichtung am Mittenabschnitt (13) angreift und ihn wenigstens teilweise an einer Bewegung in Richtung (X) aus dem Gassackmodul heraus hindert, wobei die Rückhalteeinrichtung so ausgebildet ist, daß sie den Mittenabschnitt (13) nach einer anfänglichen Rückhaltung freigeben kann, und mit einem Gasgenerator (5), **dadurch gekennzeichnet, daß**
die Rückhalteeinrichtung durch heißes Gas aus dem Gasgenerator (5) zerstört wird.

2. Gassackmodul nach Anspruch 1, **dadurch gekennzeichnet, daß** es ein den Gasgenerator (5) umgebendes Halteteil (6) aufweist, an dem die Rückhalteeinrichtung angreift.

3. Gassackmodul nach Anspruch 1 oder 2, **dadurch gekennzeichnet, daß** die Rückhalteeinrichtung während des Entfaltens gezielt zerstört wird, um den Mittenabschnitt (13) freizugeben.

4. Gassackmodul nach Anspruch 3, **dadurch gekennzeichnet, daß** die Rückhalteeinrichtung ein Fangband (15; 23; 61) aufweist, das am Mittenabschnitt (13) befestigt ist.

5. Gassackmodul nach Anspruch 4, **dadurch gekennzeichnet, daß** das Fangband eine Reißnaht aufweist, welche zum Freigeben des Mittenabschnitts (13) zerstört wird.

6. Gassackmodul nach einem der vorhergehenden Ansprüche, **dadurch gekennzeichnet, daß** die Rückhalteeinrichtung eine innenseitig am Mittenabschnitt (13) befestigte Schlaufe (15) und einen Haltering (16), in den die Schlaufe (15) eingehängt ist, aufweist, wobei Schlaufe (15) oder Haltering (16) nach anfänglicher Rückhaltung des Mittenabschnitts (13) zerstört werden.

## Claims

1. A gas bag module, comprising a gas bag (10), which has a front wall (12) whose center portion (13) in the inflated condition has an indentation (14) produced by a restraining means engaging the center portion (13) and at least partly preventing it from moving in the direction (X) out of the gas bag module, the restraining means being configured such that it can release the center portion (13) after an initial restraint action, and further comprising a gas generator (5), **characterized in that**
the restraining means is destroyed by hot gas from the gas generator (5).

2. The gas bag module as claimed in claim 1, **characterized in that** it has a holding member (6) which surrounds the gas generator (5) and which is engaged by the restraining means.

3. The gas bag module as claimed in claim 1 or 2, **characterized in that** the restraining means is deliberately destroyed during deployment, in order to release the center portion (13).

4. The gas bag module as claimed in claim 3, **characterized in that** the restraining means has a limiting strap (15; 23; 61) which is attached to the center portion (13).

5. The gas bag module as claimed in claim 4, **characterized in that** the limiting strap has a tear seam which is destroyed for releasing the center portion (13).

6. The gas bag module as claimed in any of the preceding claims, **characterized in that** the restraining means has a loop (15) attached to the inside of the center portion (13) and a retaining ring (16) into which the loop (15) is slipped, the loop (15) or the retaining ring (16) being destroyed after an initial restraint of the center portion (13).

## Revendications

1. Module de coussin à gaz, comportant un coussin à gaz (10) qui présente une paroi antérieure (12) dont le tronçon médian (13) présente un creux (14) à l'état gonflé, par le fait qu'un moyen de retenue s'engage dans le tronçon médian (13) et l'empêche au moins partiellement de se déplacer en direction (X) hors du module de coussin à gaz, le moyen de retenue étant réalisé de telle sorte qu'il peut libérer le tronçon médian (13) après un début de retenue, et comportant un générateur de gaz (5), **caractérisé en ce que**
le moyen de retenue est détruit par du gaz chaud provenant du générateur de gaz (5).

2. Module de coussin à gaz selon la revendication 1, **caractérisé en ce qu'**il présente une pièce de support (6) entourant le générateur de gaz (5) et sur laquelle s'engage le moyen de retenue.

3. Module de coussin à gaz selon l'une des revendications 1 ou 2, **caractérisé en ce que** le moyen de retenue est détruit délibérément pendant le déploiement pour libérer le tronçon médian (13).

4. Module de coussin à gaz selon la revendication 3, **caractérisé en ce que** le moyen de retenue présente une bande de garde (15 ; 23 ; 61) qui est fixée sur le tronçon médian (13).

5. Module de coussin à gaz selon la revendication 4, **caractérisé en ce que** la bande de garde présente une couture de déchirement qui est détruite pour libérer le tronçon médian (13).

6. Module de coussin à gaz selon l'une des revendications précédentes, **caractérisé en ce que** le moyen de retenue présente une boucle (15) fixée sur la face intérieure du tronçon médian (13), et une bague de retenue (16) dans laquelle est suspendue la boucle (15), la boucle (15) ou la bague de retenue (16) étant détruite après un début de retenue du tronçon médian (13).
